Europäisches Patentamt

(19) European Patent Office    (11) Publication number: **0 027 027**
A1
Office européen des brevets

(12) **EUROPEAN PATENT APPLICATION**

(21) Application number: **80303446.1**    (51) Int. Cl.³: **F 16 K 3/03**, F 16 L 55/12

(22) Date of filing: **30.09.80**

(30) Priority: **02.10.79 GB 7934051**
**23.10.79 GB 7936735**
**24.01.80 GB 8002400**

(71) Applicant: **Evans, Gerald John, Beechwood Cadbury Camp Lane, Clapton-in-Gordano, Portishead, Bristol (GB)**

(43) Date of publication of application: **15.04.81 Bulletin 81/15**

(72) Inventor: **Evans, Gerald John, Beechwood Cadbury Camp Lane, Clapton-in-Gordano, Portishead, Bristol (GB)**

(84) Designated Contracting States: **AT BE CH DE FR IT LI LU NL SE**

(74) Representative: **Carpmael, John William Maurice et al, CARPMAELS & RANSFORD 43 Bloomsbury Square, London, WC1A 2RA (GB)**

(54) **Flexible gate valve.**

㊙ The valve comprises a housing (26) containing two separate channels in which are an iris gate valve (28) and a flexible diaphragm valve (27) which can be moved by respective lead screws (33) and (30) to open up and block a pipe insert. The iris valve (28) has a number of segments (47, 48, 49, 50) which are opened by a flange (52) on one segment (47) which successively engages the other segments (48, 49, 50).

EP 0 027 027 A1

GATE VALVE

This invention relates to a gate valve for control of fluid flow or pressure.  Gate valves are conventionally provided in pipes and mains through which fluid such as gas, oil, chemicals, and water flow for various purposes.  A gate valve may be provided to close off a pipe or main, it may be used to reduce the flow, or it may simply be there for emergency use.

Particularly when such gate valves are not regularly used they tend to corrode, to stick and even to become unusable or at best inefficient when they are required.

It is an object of this invention to provide a gate valve which is adapted to be inserted into a pipe or main when required and can, if desired, be removed from the pipe or main after use.

In order to achieve this the gate valve is made completely portable and can be taken to its place of use and then inserted into a pipe so as to close off the pipe or reduce the pressure in the pipe.

The gate valve could also be used as an underpressure pipe stopping device such as is commonly used in water or gas mains for temporarily stopping off part of the pipe or main in order to make repairs or to carry out other work.

An object of the present invention is to provide a gate valve which is portable and which can be easily inserted into a pipe or mains so as to provide a temporary or permanent blockage or reduction in pressure.

In accordance with one aspect of the present invention a gate valve for control of fluid flow or pressure comprises a single housing containing an iris type gate valve and also a flexible diaphragm valve or inflatable sealing valve and includes independent means for moving each valve axially from its stored position within the housing to an operative position, and means to cause each valve, when positioned within a pipe, to open up to a fluid flow sealing or blocking position. Preferably each valve is movable axially by screw device, and the means to open up the iris type gate valve may comprise a rack and pinion gear operable by a screw device.

The flexible diaphragm valve preferably comprises a collapsible flexible sheet of rubber or like material supported on a collapsible spring and backed by a more rigid diaphragm in the form of a non-expandable membrane of semi-flexible material. Preferably the iris valve comprises a number of overlapping segments one of which has at least one stepped edge flange, the steps being arranged to successively engage edges of the other segments to open the valve.

The segments may be interconnected by pin and slot connections which limit relative opening and closing movements of the segments so as to ensure that they remain in overlapping relationship when they close. The device may be used in combination with a sliding gate valve and a valve housing pipe insert, the pipe insert being adapted to be placed in a pipe or main and having a radial aperture adapted to be opened or closed by the sliding gate valve to allow the iris type gate valve and the flexible diaphragm valve to enter the pipe insert.

Preferably the pipe insert housing has a removable plug in the radial aperture.

By using the gate valve of this invention, it is possible to insert first the iris type gate valve and then the flexible diaphragm valve into the pipe insert housing and to complete a seal of the pipe by operating the two valves successively into their operative positions. When the repair or other work is finished the whole device can be removed and the aperture in the valve housing closed up again to seal the pipe.

From another aspect the invention comprises a valve housing for insertion into a length of pipe the housing having a main body with aligned end apertures adapted to mate with adjacent lengths of pipe and a radial extension containing a channel terminating in an extreme radial aperture, adapted to receive an iris type gate valve and a flexible diaphragm valve, the radial aperture having a removable sealing plug and/or cover plate, the radial extension channel being divided into two separate channels and containing a removable insert guide also providing two channels. Preferably the insert guide is shaped to constrain the iris type gate valve and the diaphragm or inflatable valves into their correct position within the main body of the housing.

Preferably the main body of the housing has one or more radial grooves or spherical rings to provide a sealing surface for the diaphragm valve, and strong mechanical support for the iris type gate valve.

From another aspect the invention comprises an iris type valve including a number of overlapping segments pivoted on a common shaft, one of the segments being rotatable by the shaft and the other segments rotatable on the shaft, the segment rotatable by the shaft having at least one stepped flange on one edge extending at right angles to the segment, the steps being adapted to engage and rotate successively, the remaining segments so as to move the valve to its fluid blocking position.

Preferably the segments are interconnected by pin and slot mechanism to return the valve to the position in which the segments are returned to the vertically aligned positions.

In the accompanying drawings:

Fig. 1 illustrates a pipe insert valve housing for use with the invention; above which is shown a sliding gate valve and a domed housing with a tool for removing a sealing plug from the valve housing;

Fig. 2 is a plan view of the sliding gate valve shown in Fig. 1.

Fig. 3 is a plan view of the domed housing shown in Fig. 1;

Fig. 4 is a vertical section through a gate valve embodying the present invention when applied to a pipe insert valve housing via a sliding gate valve,

Fig. 5 is a section take at right angles to the section of Fig.4;

Fig. 6 is a similar section to Fig. 4 but shows the two valves moved down into the pipe insert valve housing;

Fig. 7 is a section similar to Fig. 5 showing the iris valve in its operative position,

Fig. 8 is a plan view of the device showing the drive end of lead screws by which the valves are operated,

Fig. 9 is an exploded view of the iris diaphragm valve,

Fig. 10 is a schematic elevation of the iris diaphragm valve when in its operative position; and

Fig. 11 to 13 illustrate a diaphragm valve used with this invention.


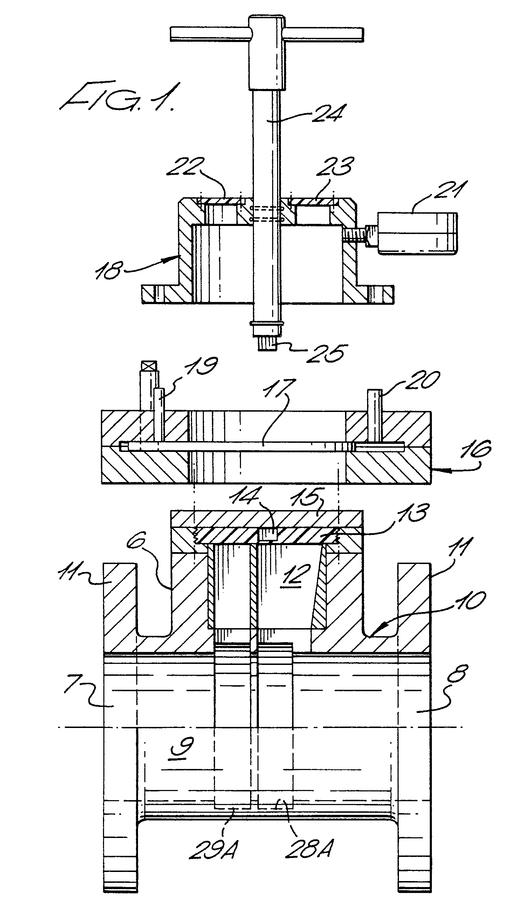

In Fig. 1 is shown a pipe insert valve housing 10 which is adapted to be inserted and bolted between two sections of a continuous pipeline. The flanges 11 are adapted to be bolted to similar flanges on adjacent ends of pipes. They may alternatively be welded or joined by other means. Housing 10 has a main body 9 with apertures 7 and 8 adapted to be aligned with adjacent pipes and a radial extension 6 containing a channel which terminates in aperture 12.


The valve housing has a radial aperture 12 which is adapted to be closed by a plastic or brass sealing plug 13 which is screwed into position and has a square socket 14 by which it can be removed. The plastic sealing plug 13 is covered by a metallic or plastic sealing plate 15 which is bolted in position and sealed. When it is desired to close off the section of pipe adjacent to this pipe insert the sealing plug 13 has to be removed.

This is effected by removing the plate 15 and the bolting into position a sliding gate valve housing 16 which contains a sliding gate valve 17.

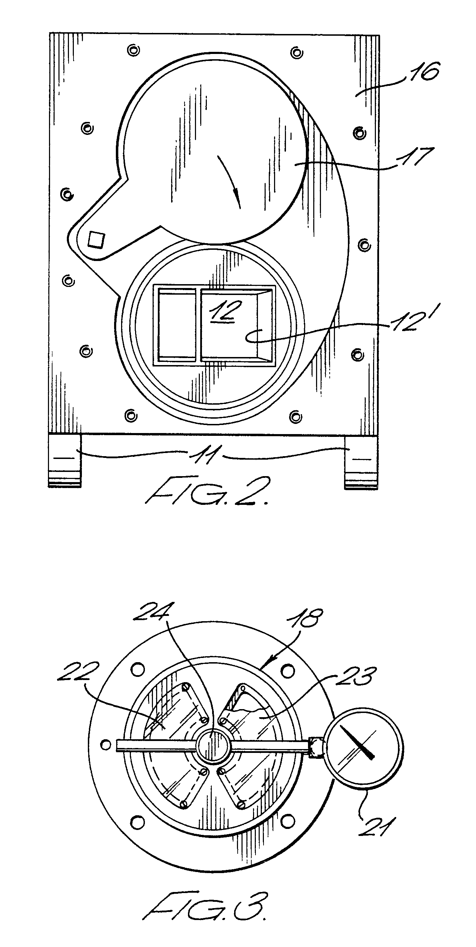

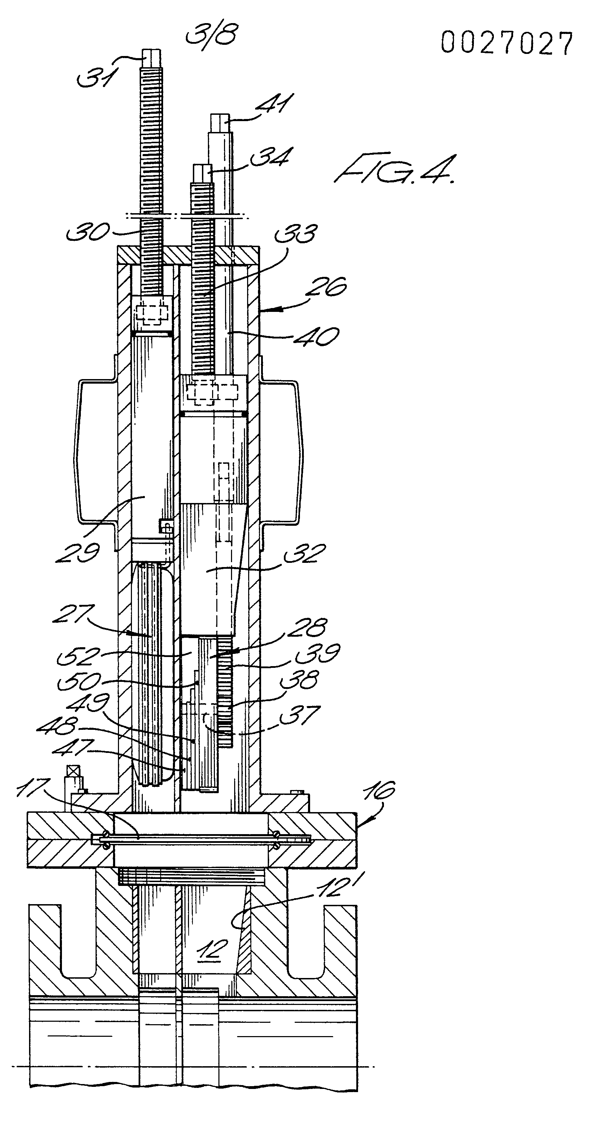

A domed housing 18 is then located over small and large diameter locating studs 19 and 20 and bolted into position. The housing 18 includes a pressure guage 21 and inspection windows 22 and 23. A tool 24 with a square end 25 on it is then inserted through an aperture in the top of the domed housing. The valve plate 17 (see Fig. 2 and Fig 3.) is then moved to one side and the tool can be used to remove the sealing plug 13.

Once the sealing plug 13 has been removed to a position above the level of the sliding gate valve 17, the sliding gate valve can be moved to its closed position to block off the flow of fluid out of the pipe housing.

The domed housing 18 can then be removed together with the tool. During this time the pressure can be read on the pressure guage and a watch can be kept to ensure that the sealing plug is being removed properly through the inspection windows 22 and 23.

The gate valve of this invention can then be bolted in place of the domed housing on top of the gate valve housing 16.

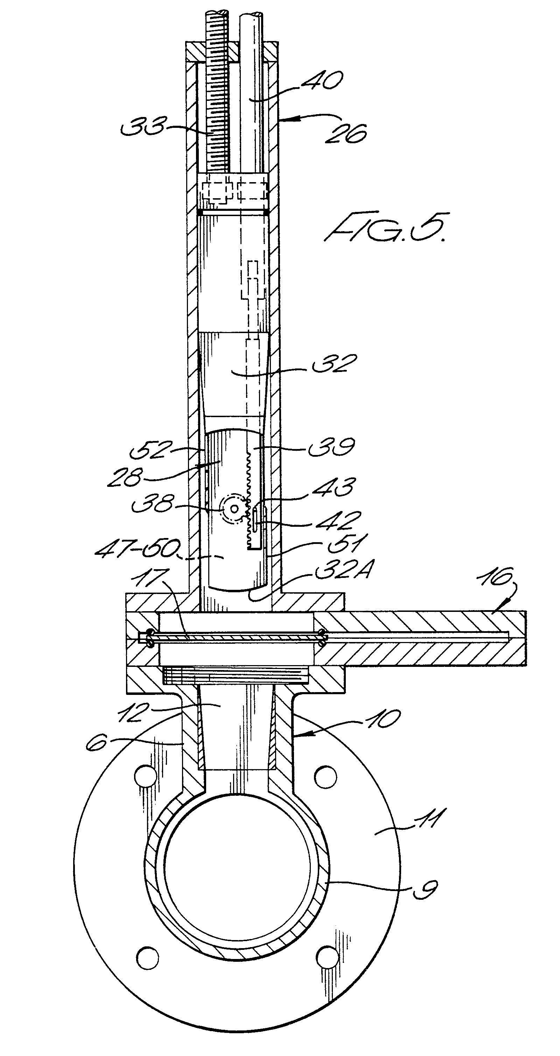

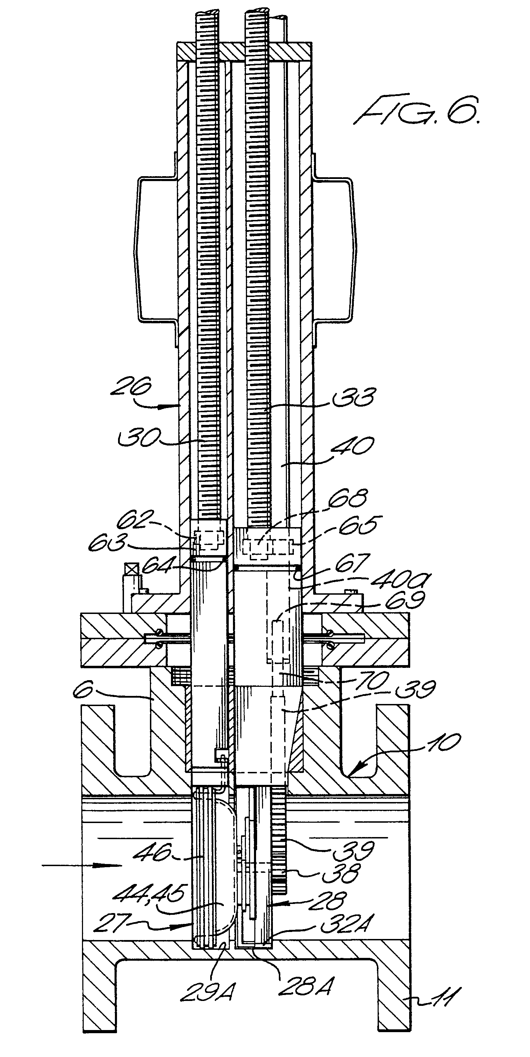

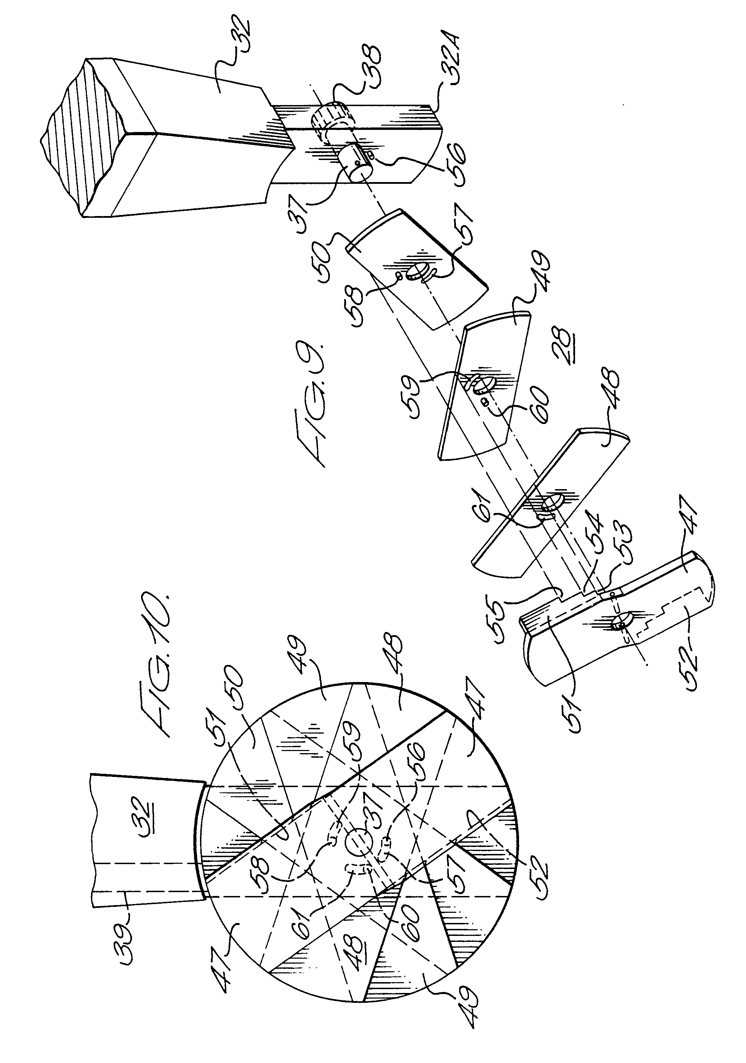

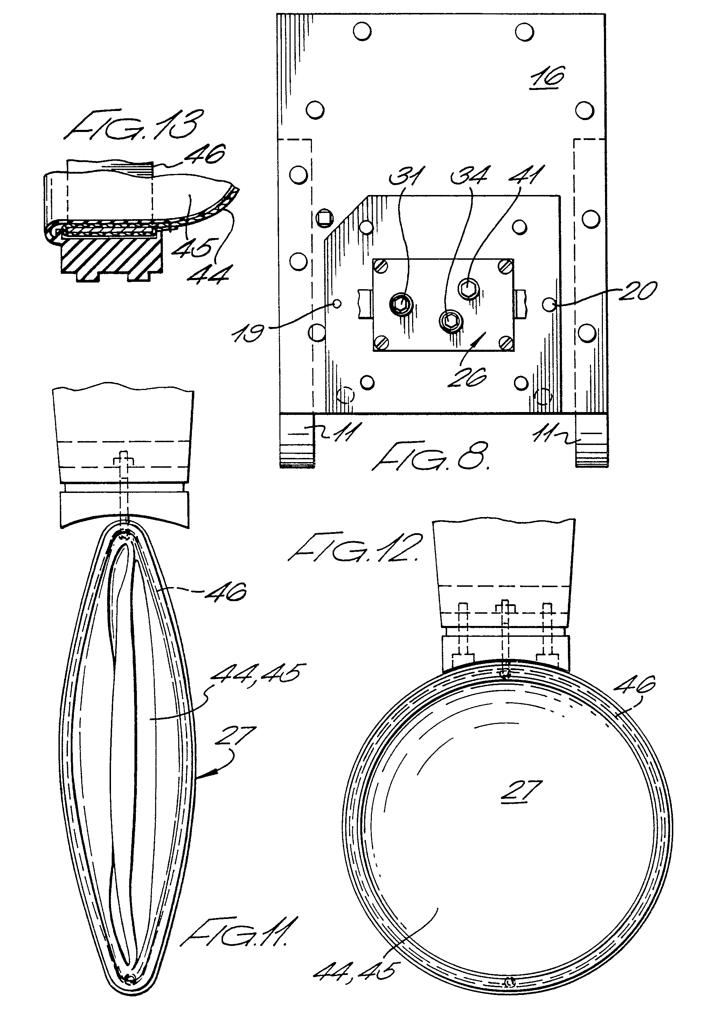

It will be seen from Fig. 4 and Fig. 5 that the device comprises a single housing 26 which has separate channels containing a flexible diaphragm valve 27 and an iris gate valve 28 both of which are shown in their folded up state in Fig. 4. The diaphragm 27 is supported on a sliding block 29 moveable by a lead screw 30 operable from its drive head 31. The iris gate valve 28 (see also Fig. 9) is carried on a sliding block 32 movable by a lead screw 33 operable from its head 34. The iris gate valve comprises a number of segments 47-50 on a common shaft 37. They are operable by means of a pinion 38 and rack 39. the rack being vertically movable by means of a lead screw 40 which has an operating head 41.
As seen in Fig.5 the rack 39 has a slot 42 and pin 43 to
guide it.

Having bolted the device firmly into position the sliding
plate 17 of the gate valve can be opened so as to allow
fluid to escape but it will only escape into the housing
26 which is fluid tight.  The iris gate valve 28 can now
be lowered through the aperture 12.  Within this aperture
is an insert guide 12'so as to make sure that the iris
gate valve is accurately guided into position.

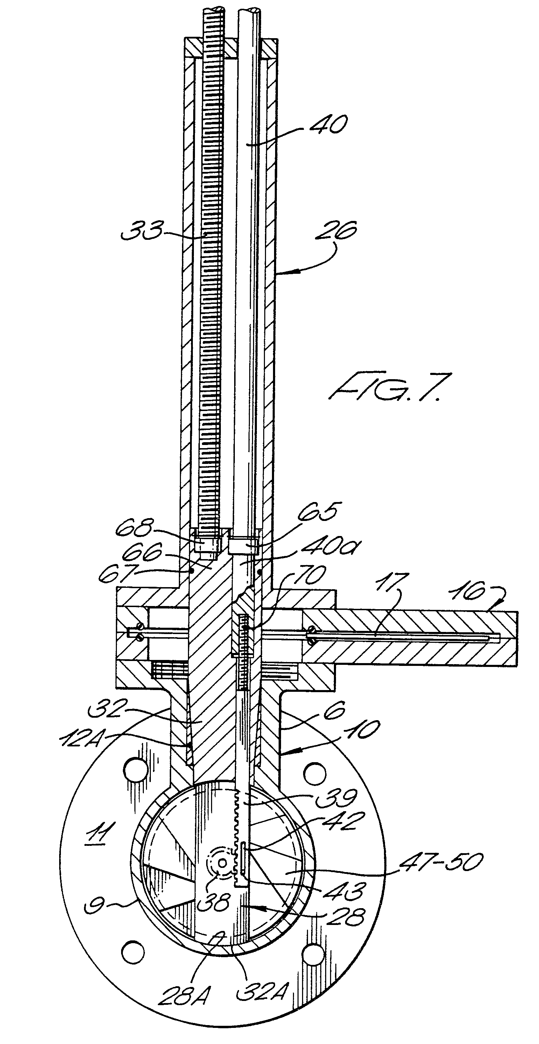

By operating the lead screw 33 the iris gate valve 28 is
lowered into the position shown in Fig 6, guided by the
shaped insert guide 12'.  The lower end 32A of the
sliding block 32 seats in the recess 28A to hold and
locate the valve thus giving it mechanical strength.

Once it is in that position it can be opened fully to its
fluid blocking position by operating lead screw 41 which
through the rack 39 and pinion 38 causes the segments of
the iris gate valve to open fully so as to completely fill
the pipe insert valve housing area except for minor leakages.  The iris valve opens into groove 28A in the housing
10 to provide a 90% seal.  This reduces the pressure and
fluid flow and provides the mechanical strength to support
the flexible diaphragm seal.  The operation of the iris
gate valve will be described in more detail later.

Once the main flow has been checked the diaphragm valve
can be inserted and opened.  It will be guided by shaped
insert guide 12'.  The diaphragm valve 27 is lowered into
its operative position as shown in Fig.6 by operating
lead screw 30 by turning its drive head 31.  The valve is
so designed that as the valve is compressed its lower end
abuts the groove 29A in the wall of the pipe insert valve
housing and as pressure increases the flexible diaphragm
valve opens up and the whole rim of the valves mates
firmly with the surface of groove 29A to seal the pipe.

As illustrated in Figs. 6 and 11 to 13 the valve consists
of a flexible rubber diaphragm 44 and a more rigid diaphragm 45, both supported by a spring steel split frame 46.
The spring steel split frame opens up to a circular
configuration as it is pushed into position in the recess
of the pipe. The rubber diaphragm 44 expands to the
position shown in Figs. 6 and 12 and is prevented from
expanding further by the semi-rigid diaphragm 45 and also
the rigid iris valve. The fluid pressure in the pipe
forces the diaphragm against the iris valve and against
the wall of the pipe to maintain a seal. The diaphragm
is oversized so that it will compress into the recess.

When it is desired to remove the valves the same sequence
can be carried out in reverse so that the complete device
with both the iris valve and the diaphragm valve can be
removed and the pipe insert sealed up again by replacing
the sealing plug 13 and sealing plate 15 after having
removed the sliding gate valve 16.

The iris type valve is shown in more detail in Figs. 9 and
10. It consists of four segments 47, 48, 49 and 50.
Segment 47 is pinned to shaft 37 and segments 48, 49, 50
are rotatably mounted on shaft 37.

Segment 47 has two flanges 51 and 52 which are stepped as
shown in Fig.9. The steps 53, 54 and 55, on each flange
51, 52 are each adapted to successively engage one of the
segments 48, 49, 50 respectively as the segment 47 is
slowly rotated by pinion 38 and shaft 37 to close the
valve. The step 53 first engages segment 48 and turns it
to an extent limited by the pin and slot 60, 61. Step 54
then engages segment 49 and turns it through a similar arc
and so on until all the segments have been opened up.
When the iris valve is opened the pairs of pins and slots
shown at 56, 57, 58, 59 and 60, 61 which interengage the
segments cause the segments to successively close one in
the other to return to the position shown in Fig. 5 in
which all the segments lie on top of one another in a pile.

The invention can be applied to gas, oil, or water pipes and can for example be used on oil rigs for emergency control of pipelines.  It is particularly valuable where pressures if the order of 100 p.s.i. (e.g. in 18" gas mains) arise.

The iris valve gives a total circular closure and the flanges seal up the gaps between the segments.

As can be seen in Figure 6, the lower end of the lead screw 30 is mounted in a ball race 62 located in a sliding metal block 63 which carries a gas seal 64 which may for example be of rubber or fibre material.  Similarly the lead screw 40 is supported by a ball race 65 located in a sliding metal block 66 which has a gas tight ring seal 67.  The lead screw 33 is mounted in a ball race 68 in the same block 66.  Lead screw 40 extends at 40a into a bore in block 66 and is rotatable in the bore.  Lead screw 40 has an internal thread 69 which engages a threaded extension 70 on rack 39 to move the rack up and down to open and close the segments of the iris valve.  The seals 64 and 67 prevent escape of gas or other fluid up through the housing 26.

CLAIMS

1. A gate valve assembly for control of fluid flow or pressure the valve comprising an iris type gate valve and also a flexible diaphragm valve or inflatable sealing valve, characterised by this, that a single detachable housing (26) contains both the iris type gate valve (28) and also the flexible diaphragm valve (27) or inflatable sealing valve, and includes independent means (41, 39, 38; 30, 31) to cause each valve, when positioned within a pipe, to open up to a fluid flow sealing or blocking position.

2. A valve according to claim 1 and characterised by this, that each valve is movable axially by a screw device (32m 33; 29, 30, 31).

3. A valve according to claim 1 or claim 2 characterised by this, that the means to open up the iris type gate valve comprises a rack and pinion (38, 39) operable by a screw device (40, 41).

4. A valve according to any preceding claim and characterised by this, that the flexible diaphragm valve comprises a collapsible flexible sheet of rubber (44) or other material supported on a collapsible spring (46) and backed by a more rigid diaphragm (45) in the form of a non-expandable membrane of semi-flexible material.

5. A valve according to any preceding claim and characterised by this, that the iris valve (28) comprises a number of overlapping segments (47, 48, 49, 50) one of which (47) has stepped edge flanges (51, 52) the steps (53, 54, 55) being arranged to successively engage edges of the other segments (48, 49, 50) to open the valve.

6. A valve according to claim 5 and characterised by this, that the segments (47 to 50) are interconnected by pin and slot connections (56, 57, 58, 59; 60, 61) which limit relative opening and closing movements of the segments so as to ensure that they remain in overlapping relationship when they close.

7. A device according to any preceding claim characterised by being in combination with a sliding gate valve (16, 17) and a valve housing pipe insert (10) the pipe insert (10) having a radial aperture (12) adapted to be opened or closed by the sliding gate valve to allow the iris type gate valve (28) and the flexible diaphragm valve (27) to enter the pipe insert.

8.    A device according to claim 7 and characterised by this, that the pipe insert (10) has a removable plug (13) in said radial aperture.

9.    A device according to claim 8 characterised by being in combination with a domed housing (18) supporting a plug removing tool (24) one end of which engages a socket (14) in the removable plug (13).

10.    A valve housing for insertion in a length of pipe, the housing having a main body with aligned end apertures adapted to mate with adjacent lengths of pipe and a radial extension containing a channel terminating in an extreme radial aperture, characterised by this, that the housing is adapted to receive an iris type gate valve (28) and a flexible diaphragm (27), the radial aperture (12) having a removable sealing plug (13) and cover plate (15) and the radial extension channel (  ) being divided  into two separate channels and containing a removable insert guide (42) also providing two channels.

11.    A valve housing according to claim 10 and characterised by this, that the insert guide (42) is shaped to constrain the iris type gate valve and the diaphragm or inflatable valves into their correct position within the main body of the housing.

12.    A valve housing according to claim 10 or claim 11 characterised by this, that the main body of the housing (10) has a radial groove (43) or spherical rings, to provide a sealing surface and mechanical support for the diaphragm valve and strong mechanical support for the iris type gate valve.

13.    An iris type valve (29) including a number of overlapping segments (47, 48, 49, 50) pivoted on a common shaft, one of the segments being rotatable by the shaft and the other segments rotatable on the shaft characterised by the segment (47) rotatable by the shaft (37) having at least one stepped flange (51, 52) on one edge extending at right angles to the segment, the steps (53, 54, 55) being adapted to engage and rotate successively the remaining segments (48, 49, 50) so as to move the valve to its fluid blocking position.

14.  An iris type valve according to claim 13 and characterised by this, that the segments are interconnected by pin and slot mechanism (56, 57 etc) to return the valve to its closed position.

0027027

*FIG.1.*

FIG.2.

FIG.3.

0027027

FIG.4.

0027027

FIG.5.

FIG.6.

FIG.7.

FIG.9.

FIG.10.

0027027

FIG.13

FIG.8.

FIG.12.

FIG.11.

| | **DOCUMENTS CONSIDERED TO BE RELEVANT** | | | **CLASSIFICATION OF THE APPLICATION (Int. Cl.3)** |
|---|---|---|---|---|
| Category | Citation of document with indication, where appropriate, of relevant passages | | Relevant to claim | |
| A | US - A - 3 665 966 (B. VER NOOY) -- | | | F 16 K 3/03 |
| A | AT - B - 268 796 (E. HAWLE) -- | | | F 16 L 55/12 |
| A | US - A - 2 482 696 (McDONALD D. SMITH et al.) -- | | | |
| A | US - A - 2 476 907 (W.E. PRESTON et al.) -- | | | |
| A | GB - A - 607 866 (ANGLO-IRANIAN OIL) -- | | | **TECHNICAL FIELDS SEARCHED (Int.Cl.3)** |
| A | US - A - 2 307 273 (W.J. HUGHES) -- | | | F 16 K 3/00 |
| A | US - A - 2 270 365 (W.G. WILSON) -- | | | F 16 K 7/00 |
| A | US - A - 499 043 (A.J. SANDS) ---- | | | F 16 K 11/00 |
| | | | | F 16 K 43/00 |
| | | | | F 16 L 55/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Date of completion of the search | Examiner | |
| Berlin | 28-11-1980 | SCHLABBACH | |

EPO Form 1503.1 06.78